# EUROPÄISCHE PATENTANMELDUNG

(11) **EP 0 711 932 A2**
(43) Veröffentlichungstag der Anmeldung: **15.05.1996**
(21) Anmeldenummer: 95117757.5
(22) Anmeldetag: 10.11.1995
(51) Int. Cl.: F16D 55/224

(54) **Schwimmsattel für Scheibenbremse**

(30) Priorität: 12.11.1994 DE 4440519
(71) Anmelder: ITT Automotive Europe GmbH, D-60488 Frankfurt am Main (DE)
(72) Erfinder: Thiel, Rudolf, D-60488 Frankfurt/Main (DE); Kast, Helmut, D-60487 Frankfurt/Main (DE); Metzen, Hans-Peter, D-61352 Bad Homburg (DE)
(74) Vertreter: Blum, Klaus-Dieter, Dipl.-Ing.

(57) **Zusammenfassung**

Ein Schwimmsattel für eine Scheibenbremse besitzt ein Sattelgehäuse (1), das aus einem ersten Gehäuseschenkel (2) mit einer Bremsbetätigungsvorrichtung (3), einem zweiten Gehäuseschenkel (4) und einem die beiden Gehäuseschenkel (2,4) verbindenden Brückenabschnitt (5) besteht. Der Brückenabschnitt (5) ist mit einem Fenster (7) versehen, das seine in Umfangsrichtung gemessene maximale Breite (8) im Bereich der Bremsscheibe (6) aufweist und dessen Breite zum ersten Gehäuseschenkel (2) hin abnimmt, bis sie am Ende (9) des Fensters (7) weniger als die halbe maximale Breite (8) beträgt. Mit der erfindungsgemäßen Umfangskontur (12) des Fensters (7) wird eine gute Kühlung der Bremsscheibe (6) und der Bremsbeläge bei gleichzeitig hoher Steifigkeit des Sattelgehäuses (1) erzielt und eine erhebliche Senkung der Bremsflüssigkeitstemperatur erreicht.

## Beschreibung

Die Erfindung betrifft einen Schwimmsattel für eine Scheibenbremse gemäß dem Oberbegriff des Patentanspruchs 1.

Aus der DE 28 09 650 A1 ist ein derartiger Schwimmsattel für eine Scheibenbremse bekannt. Das Sattelgehäuse besitzt einen ersten Gehäuseschenkel mit einer hydraulischen Bremsbetätigungsvorrichtung, der an einem ersten auf der einen Axialseite einer Bremsscheibe angeordneten Bremsbelag anliegt, und einen zweiten Gehäuseschenkel der an einer zweiten, auf der anderen Axialseite der Bremsscheibe angeordneten Bremsbelag anliegt. Beide Gehäuseschenkel sind durch einen Brückenabschnitt verbunden, der sich über den äußeren Rand der Bremsscheibe erstreckt und im Bereich der Bremsscheibe und der Bremsbeläge mit einem Fenster versehen ist. Das Fenster dient zur besseren Belüftung und Kühlung der Bremsscheibe und der Bremsbeläge. Die Anordnung eines sehr großen Fensters hat zwar eine bessere Kühlung zur Folge, die jedoch durch eine verminderte Steifigkeit bzw. verminderte Stabilität des Sattelgehäuses erkauft wird.

Ausgehend von einem Schwimmsattel gemäß dem Oberbegriff des Patentanspruchs 1 hat sich die Erfindung zur Aufgabe gestellt, das Sattelgehäuse im Hinblick auf eine gute Kühlung und hohe Steifigkeit zu verbessern und die Temperatur der Bremsflüssigkeit erheblich zu senken (ca. 15 - 25°C).

Die Lösung der Aufgabe ergibt sich aus dem kennzeichnenden Teil des Patentanspruchs 1. Im Prinzip besteht die Lösung darin, im Bereich der Bremsscheibe wo die größte Wärmemenge anfällt, auch die maximale Breite des Fensters anzuordnen, während die Fensterbreite zum ersten Gehäuseschenkel hin abnimmt, um die Steifigkeit und Stabilität des Brückenabschnitts zu vergrößern. Da in dem ersten Gehäuseschenkel die vorzugsweise hydraulische Bremsbetätigungsvorrichtung untergebracht ist, die die Zuspannkraft zum Andrücken der Bremsbeläge an die Bremsscheibe erzeugt, treten im Breich des ersten Gehäuseschenkels größere Biegebeanspruchungen auf, die eine erhöhte Steifigkeit erfordern. Diese Tatsache bei der Gestaltung des Fensters zu berücksichtigen, ist das Verdienst der voliegenden Erfindung.

In den Unteransprüchen sind vorteilhafte Ausführungsformen des Fensters hinsichtlich seiner Maße und Form beschrieben, die in bezug auf eine Optimierung der Kühlung einerseits und der Steifigkeit des Schwimmsattels andererseits zu empfehlen sind.

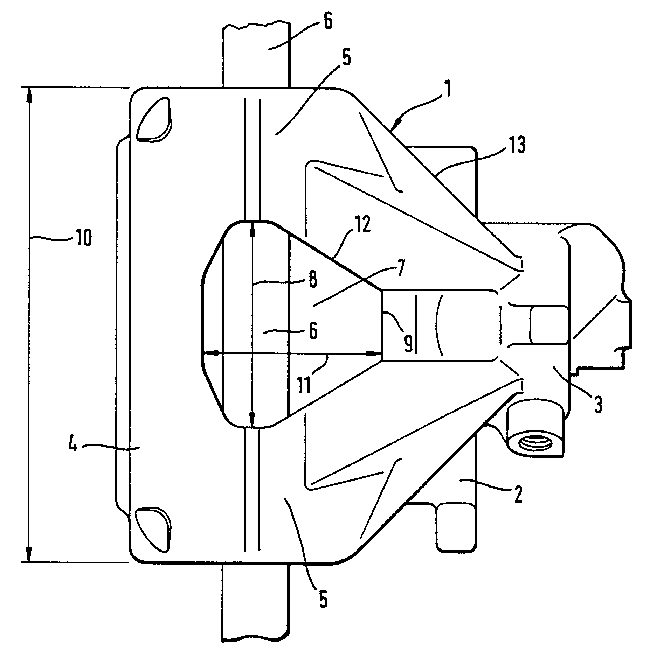

Ein Ausführungsbeispiel der Erfindung wird nachfolgend anhand der einzigen Zeichnung näher erläutert.

In der Zeichnung ist ein Schwimmsattel für eine Scheibenbremse dargestellt, dessen Sattelgehäuse 1 einen ersten Gehäuseschenkel 2 mit einer Bremsbetätigungsvorrichtung 3 und einem zweiten Gehäuseschenkel 4 aufweist, wobei die beiden Gehäuseschenkel 2, 4 durch einen Brückenabschnitt 5 miteinander verbunden sind. Der Brückenabschnitt erstreckt sich über eine Bremsscheibe 6 und nicht gezeigte Bremsbeläge, die zu beiden Axialseiten der Bremsscheibe 6 angeordnet sind.
Der Brückenabschnitt 5 ist mit einem Fenster 7 versehen, das seine in Umfangsrichtung gemessene maximale Breite 8 im Bereich der Bremsscheibe 6 aufweist. Die Breite des Fensters 7 nimmt zum ersten Gehäuseschenkel 2 hin ab, bis sie am Ende 9 des Fensters 7 weniger als ca. die halbe maximale Breite 8 beträgt. Die maximale Breite 8 wiederum beträgt im wesentlichen ein Drittel der in Umfangsrichtung gemessenen Breite 10 des Brückenabschnitts 5. Die axiale Länge 11 des Fensters 7 entspricht im wesentlichen seiner maximalen Breite 8. Bei dem gezeigten Schwimmsattel kann die Umfangskontur 12 des Fensters 7 auf einfache Weise so beschrieben werden, daß sie im wesentlichen der vereinfachten Umfangskontur 13 des Sattelgehäuses 1 folgt.

## Patentansprüche

1. Schwimmsattel für Scheibenbremse, der den Rand einer Bremsscheibe (6) und beiderseits der Bremsscheibe (6) angeordnete Bremsbeläge umgreift, mit einem Sattelgehäuse (1), das einen ersten Gehäuseschenkel (2) mit einer Bremsbetätigungsvorrichtung (3), einen zweiten Gehäuseschenkel (4) und eine die beiden Gehäuseschenkel (2, 4) verbindenden Brückenabschnitt (5) aufweist, der sich über die Bremsscheibe (6) erstreckt und mit einem Fenster (7) versehen ist, dadurch **gekennzeichnet**, daß das Fenster (7) seine in Umfangsrichtung gemessene maximale Breite (8) im Bereich der Bremsscheibe (6) aufweist und daß die Breite des Fensters (7) zum ersten Gehäuseschenkel (2) hin abnimmt, bis sie am Ende (9) des Fensters (7) weniger als ca. die halbe maximale Breite (8) beträgt.

2. Schwimmsattel nach Anspruch 1, dadurch **gekennzeichnet**, daß die maximale Breite (8) des Fensters (7) im wesentlichen ein Drittel der in Umfangsrichtung gemessenen Breite (10) des Brückenabschnitts (5) beträgt.

3. Schwimmsattel nach Anspruch 1 oder 2, dadurch **gekennzeichnet**, daß die axiale Länge (11) des Fensters (7) im wesentlichen der maximalen Breite (8) entspricht.

4. Schwimmsattel nach einem der Ansprüche 1 bis 3, dadurch **gekennzeichnet**, daß die Umfangskontur (12) des Fensters (7) im wesentlichen der vereinfachten Umfangskontur (13) des Sattelgehäuses (1) folgt.
